(19) Europäisches Patentamt

European Patent Office

Office européen des brevets

(11) EP 0 994 609 A1

(12) DEMANDE DE BREVET EUROPEEN

(43) Date de publication:
**19.04.2000 Bulletin 2000/16**

(51) Int. Cl.$^7$: **H04L 25/49**

(21) Numéro de dépôt: **99203234.2**

(22) Date de dépôt: **04.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.10.1998 FR 9812820**

(71) Demandeur:
**Koninklijke Philips Electronics N.V.**
**5621 BA Eindhoven (NL)**

(72) Inventeurs:
• **Chouly, Antoine**
  **75008 Paris (FR)**
• **Brun, Véronique**
  **75008 Paris (FR)**

(74) Mandataire: **Chaffraix, Jean**
  **Société Civile S.P.I.D.**
  **156, Boulevard Haussmann**
  **75008 Paris (FR)**

(54) **Méthode de construction d'un ensemble de constellations destiné à être utilisé pour transmettre des données entre un émetteur et un récepteur**

(57)     L'invention concerne une méthode simple pour construire un ensemble de constellations de puissance moyenne inférieure à un seuil fixé $P_{MAX}$.

L'invention s'applique à tous les cas dans lesquels les points des constellations à construire ne sont pas équiprobables, et donc l'expression de la puissance moyenne de l'ensemble des constellations a une forme complexe.

Elle consiste à construire un premier ensemble de constellation en considérant que les points de chaque constellation sont équiprobables, ce qui permet de construire les constellations indépendamment les unes des autres. La valeur exacte P de la puissance moyenne de l'ensemble de constellations ainsi obtenu est ensuite calculée pour vérifier si P> PMAX. Dans ce cas l'ensemble de constellation est modifié en supprimant un ou plusieurs points dans une ou plusieurs constellations jusqu'à obtenir une puissance moyenne $P<P_{MAX}$ pour ledit ensemble.

- Applications: Modems PCM notamment,

FIG.3

EP 0 994 609 A1

## Description

L'invention concerne une méthode pour construire un ensemble de constellations de points non équiprobables destiné à être utilisé pour transmettre des données entre un émetteur et un récepteur, ladite méthode permettant d'obtenir pour ledit ensemble de constellations une puissance moyenne inférieure ou égale à un seuil fixé.

L'invention concerne aussi un équipement d'émission - réception utilisant une telle méthode, (notamment un modem), et un système de transmission comportant un tel équipement d'émission - réception.

L'invention s'applique notamment aux modems de type PCM (de l'anglais Pulse Coded Modulation), et en particulier aux modems conformes à la recommandation V.90 de l'ITU (de l'anglais International Telecommunication Union).

Dans la suite de la description, les références à la recommandation V.90 renvoient à la version pré-publiée de Septembre 1998.

La recommandation V.90 de l'ITU utilise un ensemble de six constellations $C_i$ pour transmettre des données entre un modem de type PCM connecté de façon numérique (appelé modem DPCM dans la suite de la description) et un modem de type PCM connecté de façon analogique (appelé modem APCM dans la suite de la description). Chaque constellation $C_i$ est constituée de $M_i$ points d'une loi de compression logarithmique linéaire par segments connue sous le nom de loi en A ou loi en $\mu$.

Conformément à la recommandation V.90, les bits transmis par un modem DPCM et reçus par un modem APCM sont codés par groupes de K bits pour déterminer un indice de point $K_i$ dans chacune des six constellations $C_i$. Cette opération de codage est décrite au paragraphe 5.4.3 de la recommandation V.90. Elle introduit des probabilités d'occurrence différentes pour les points des constellations $C_i$.

Comme indiqué au paragraphe 8.5.2 de la recommandation V.90, lors de l'initialisation d'une communication entre un modem DPCM et un modem APCM, le modem DPCM envoie au modem APCM la valeur maximum de la puissance moyenne de l'ensemble de constellations qui sera utilisé pour la transmission. Le modem APCM doit ensuite construire cet ensemble de constellations de façon à ne pas dépasser cette puissance moyenne maximum.

Le paragraphe 8.5.2 donne aussi l'expression P de la puissance moyenne d'un ensemble de constellations $C_i$ (i=0,..., 5), constituées de points non équiprobables du fait de l'opération de codage décrite au paragraphe 5.4.3:

$$P = \frac{1}{6} \sum_{i=0}^{5} P_i \quad \text{avec} \quad P_i = \frac{1}{2^K} \sum_{j=0}^{M_i-1} p_{i,j} . n_{i,j} \tag{1}$$

où:

- $p_{i,j}$ est le carré de l'amplitude $a_{i,j}$ du point d'indice J dans la constellation $C_i$,
- $n_{i,j}$ est représentatif de la probabilité d'occurrence du point d'indice j dans la constellation i (l'expression de $n_{i,j}$ est donnée par la recommandation V.90 aux paragraphes 8.5.2 et 5.4.3),
- et K est le plus grand entier vérifiant

$$2^K \leq \prod_{i=0}^{5} M_i .$$

Le calcul de la puissance moyenne selon l'expression (1) fait donc intervenir toutes les valeurs de $M_i$. Par conséquent, il est nécessaire de construire toutes les constellations $C_i$ simultanément, en effectuant un calcul de la puissance P à chaque fois que l'on rajoute un point à une des constellations $C_i$. Ce procédé est particulièrement complexe.

L'invention a pour but de proposer une méthode simplifiée pour construire un tel ensemble de constellations.

Pour cela, une méthode selon l'invention et telle que décrite dans le paragraphe introductif est caractérisée en ce qu'elle comporte:

- une première étape qui consiste à construire un ensemble de constellations en se basant sur des valeurs approchées des puissances desdites constellations,

- une seconde étape qui consiste à vérifier si la puissance moyenne réelle de l'ensemble de constellations obtenu lors de la première étape est inférieure ou égale audit seuil,
- une troisième étape qui consiste à réajuster si nécessaire une ou plusieurs fois ledit ensemble, en supprimant un ou plusieurs points dans une ou plusieurs constellations, de façon à ce que la puissance moyenne réelle dudit ensemble soit inférieure ou égale au seuil fixé.

Ainsi, l'invention permet de réduire fortement le nombre de calculs de l'expression (1). Des tests ont montré que trois calculs de l'expression (1) étaient suffisants pour construire un ensemble de six de constellations conformément à la recommandation V.90 (un calcul lors de la deuxième étape et au plus deux calculs lors de la troisième étape).

Bien que l'invention ait été introduite dans le cadre de la recommandation V.90, elle est applicable à tous les cas dans lesquels les points des constellations ne sont pas équiprobables, et donc la puissance moyenne de l'ensemble de constellations prend une forme complexe.

L'invention sera mieux comprise et d'autres détails apparaîtront dans la description qui va suivre en regard des dessins annexés qui sont donnés à titre d'exemples non limitatifs et dans lesquels:

- la figure 1 représente un système de transmission comportant notamment un modem APCM,
- la figure 2 est un schéma expliquant le principe de sélection de points d'une loi en A ou en $\mu$ pour former une constellation conformément à la recommandation V.90,
- la figure 3 est un diagramme regroupant les différentes étapes d'une méthode selon l'invention de construction d'un ensemble de constellations destiné à être utilisé pour la transmission de données,
- la figure 4 est un schéma en blocs des moyens de construction d'un ensemble de constellations selon l'invention.

Le mode de réalisation qui va maintenant être décrit à titre d'exemple concerne les modems PCM conformes à la recommandation V.90. Ceci n'est pas limitatif.

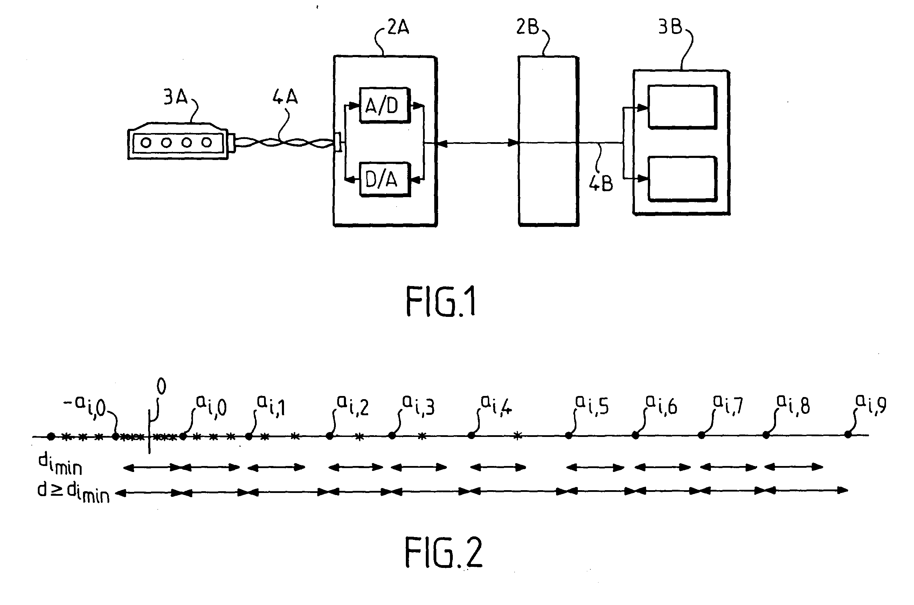

Les modems PCM permettent d'interconnecter un utilisateur A relié à un réseau de transmission par une liaison analogique et un utilisateur B relié au même réseau par une liaison numérique. Il peut s'agir par exemple d'un terminal utilisateur A communiquant avec un serveur d'informations B d'un fournisseur de services. Sur la figure 1 on a représenté un exemple d'un tel système de transmission. Le système de transmission de la figure 1 comporte un réseau numérique de télécommunications 1 comprenant deux commutateurs 2A et 2B. Un modem APCM 3A est connecté au commutateur 2A par l'intermédiaire d'une paire torsadée 4A pour transmettre des signaux analogiques. Un modem DPCM 3B est relié au commutateur 2B par l'intermédiaire d'une liaison numérique 4B, par exemple une liaison RNIS (Réseau numérique à Intégration de Services). Cette liaison numérique 4B peut être considérée comme une extension du réseau de transmission numérique : le commutateur 2B joue alors le rôle de répéteur.

Conformément à la recommandation V.90, les modems PCM utilisent six constellations $C_i$ (i=0, ..., 5) constituées de points d'une loi de compression logarithmique linéaire par segments connue sous le nom de loi en A ou en $\mu$.

Ces constellations sont construites par le modem APCM lors de l'initialisation de la communication en tenant compte de deux critères:

- la distance minimum $d_{imin}$ qui doit séparer deux points successifs de la constellation $C_i$ pour permettre de détecter les points reçus avec un taux d'erreur acceptable,
- la puissance moyenne maximum $P_{MAX}$ de l'ensemble des six constellations $C_i$.

Sur la figure 2 on a schématisé une opération de sélection de points d'une loi en A ou en $\mu$ pour former une constellation $C_i$, en tenant compte du critère de distance minimale. Les points de la loi logarithmique sont représentés par des étoiles et les points $a_{i,j}$ retenus pour former la constellation $C_i$ sont représentés par des ronds. On notera que les points de la loi logarithmique sont d'autant plus rapprochés les uns des autres qu'ils sont proches de l'origine. Ceci est dû au fait que les lois logarithmiques en A ou en $\mu$ ont été introduites à l'origine dans les convertisseurs analogique / numérique et numérique / analogique des commutateurs numériques des réseaux téléphoniques, pour la transmission de la voix, afin d'obtenir une quantification non uniforme de l'amplitude du signal à transmettre pour garantir un rapport signal à bruit constant quelle que soit l'amplitude considérée (les niveaux de quantification sont donc d'autant plus serrés qu'on se rapproche de l'origine).

Les points de la constellations $C_i$ sont disposés symétriquement par rapport à l'origine. Le premier point d'amplitude positive $a_{i,0}$ doit donc être choisi de façon à ce que la distance entre $a_{i,0}$ et $-a_{i,0}$ soit supérieure ou égale à $d_{imin}$, c'est-à-dire de façon à ce que

$$a_{i,0} \geq \frac{d_{imin}}{2} .$$

Les autres points $a_{i,j}$ de la constellation $C_i$ sont sélectionnés lorsque leur espacement est supérieur ou égal à la dis-

tance minimale $d_{imin}$. On a donc: $\forall j \geq 0$, $d = a_{i,(j+1)} - a_{i,j} \geq d_{imin}$.

Le nombre de points ainsi sélectionnés pour chaque constellation $C_i$ est limité par la puissance moyenne maximum à ne pas dépasser. Dans le cas de la recommandation V.90, comme cela a été expliqué dans le paragraphe introductif de la présente demande, la valeur moyenne de la puissance de l'ensemble des constellations utilisées est donnée par l'expression (1). L'invention propose une méthode particulièrement simple pour construire les constellations à utiliser en limitant le nombre de calculs de cette expression (1).

Pour cela, l'invention consiste à construire six constellations $C_i^{(1)}$ (i=0,...,5) indépendamment les unes des autres, en supposant que les points de chaque constellation $C_i^{(1)}$ sont équiprobables, c'est-à-dire en utilisant la valeur approchée

$$\widetilde{P}_i^{(1)} = \frac{1}{M_i^{(1)}} \sum_{j=0}^{M_i^{(1)}-1} \left[ a_{i,j}^{(1)} \right]^2$$

pour estimer la puissance moyenne de la constellation $C_i^{(1)}$ ($M_i^{(1)}$ est le nombre de points de la constellation $C_i^{(1)}$ et $a_{i,j}^{(1)}$ est l'amplitude du point d'indice j dans la constellation $C_i^{(1)}$).

En construisant chaque constellation $C_i^{(1)}$ de telle sorte que $\forall i \in \{0,...,5\}$ $\bar{P}_i^{(1)} \leq P_{MAX}$, on obtient un ensemble $E^{(1)}$ de constellations $C_i^{(1)}$ dont la puissance moyenne a pour valeur approchée:

$$\widetilde{P}^{(1)} = \frac{1}{6} \sum_{i=0}^{5} \widetilde{P}_i^{(1)} \leq P_{MAX}$$

On calcule ensuite la valeur exacte $P^{(1)}$ de la puissance moyenne de l'ensemble $E^{(1)}$ en utilisant l'expression (1). Et si $P^{(1)} > P_{MAX}$, on ajuste l'ensemble $E^{(1)}$ en supprimant un ou plusieurs points dans une ou plusieurs constellations $C_i^{(z)}$, jusqu'à obtenir un ensemble $E^{(N)}$ de puissance moyenne $P^{(N)}$ inférieure ou égale à $P_{MAX}$.

De façon avantageuse, pour tout $z \in \{1,...,N\}$, tant que $P^{(z)} > P_{MAX}$, on supprime le point de plus grande amplitude de la constellation $C_i^{(z)}$ qui a la plus grande puissance $P_i^{(z)}$.(à ce stade les puissances exactes $P_i^{(z)}$ sont disponibles puisqu'elles ont été calculées pour obtenir la valeur exacte $P^{(z)}$ de la puissance moyenne de l'ensemble $E^{(z)}$). Puis on calcule en utilisant l'expression (1) la puissance moyenne $P^{(z+1)}$ de l'ensemble de constellations $E^{(z+1)}$ ainsi obtenu.

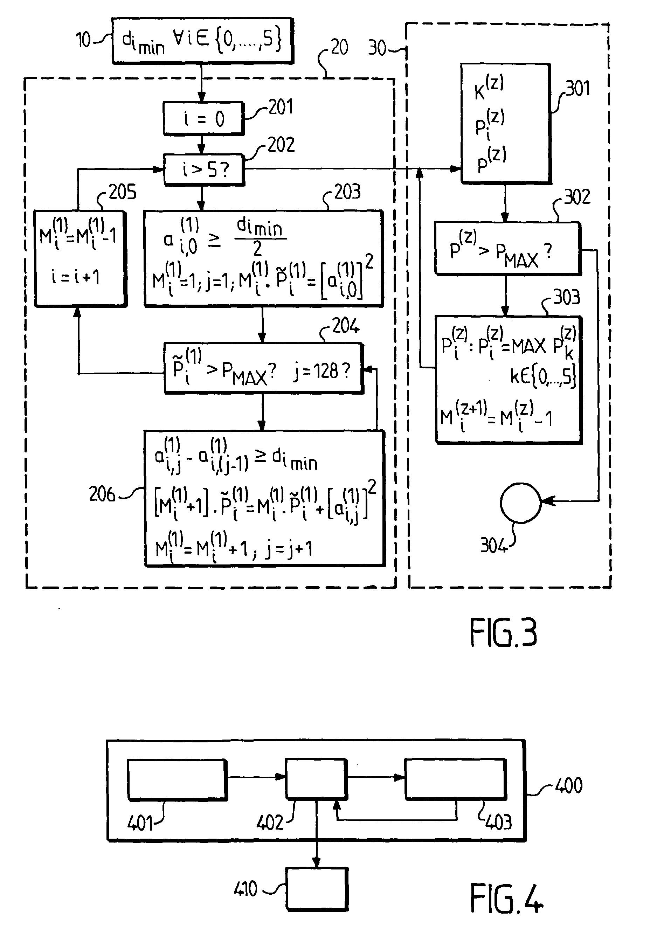

Sur la figure 3 on a résumé sous forme d'organigramme une méthode selon l'invention de construction d'un ensemble de six constellations destiné à être utilisé dans le cadre de la recommandation V.90.

A l'étape 10, on détermine les distances minimum $d_{imin}$ entre deux points successifs pour chaque constellation $C_i$, en fonction du taux d'erreur symbole SER autorisé et de la variance du bruit $\sigma_i$. En se reportant aux pages 40, 267 et 268 de la troisième édition de l'ouvrage "DIGITAL COMMUNICATIONS", de John Proakis édité aux éditions McGraw-Hill International Editions en 1995, on montre facilement que le taux d'erreur symbole SER vérifie l'inégalité suivante:

$$SER \leq \text{erfc}\left(\frac{d_{imin}}{2\sqrt{2}\sigma_i}\right) \quad \text{avec} \quad \text{erfc}(x) = \frac{2}{\sqrt{\pi}} \int_{x}^{\infty} e^{-t^2} dt$$

c'est-à-dire $d_{imin} \geq 2\sqrt{2}\sigma_i \text{erfc}^{-1}(SER)$ On choisit donc pour $d_{imin}$ le plus petit entier qui vérifie cette inégalité, soit: $d_{imin} = E[2\sqrt{2}\sigma_i \text{erfc}^{-1}(SER)]+1$, où E est la fonction partie entière. Le bruit pouvant être différent pour chaque constellation, les six constellations $C_i$ ont des distances minimums $d_{imin}$ différentes, et donc des tailles $M_i$ différentes.

A l'étape 20, on construit un premier ensemble $E^{(1)}$ de constellations $C_i^{(1)}$ qui vérifie: $\forall i \in \{0,...,5\}$:

$$\bullet \quad a_{i,0}^{(1)} \geq \frac{d_{i\,min}}{2}$$

$$\bullet \quad \forall j \geq 0, \ d = a_{i,(j+1)}^{(1)} - a_{i,j}^{(1)} \geq d_{i\,min}$$

$$\bullet \quad \widetilde{P}_i^{(1)} = \frac{1}{M_i^{(1)}} \sum_{j=0}^{M_i^{(1)}-1} \left[ a_{i,j}^{(1)} \right]^2 \leq P_{MAX}$$

Un exemple de mise en oeuvre de cette étape 20 est décrit sur la figure 3:

- à la case 201 on initialise la variable i à 0,
- à la case 202 on teste si i est supérieur à 5. Dans ce cas, on passe à l'étape suivante 30 de la méthode selon l'invention. Sinon, le fonctionnement se poursuit à la case 203.
- à la case 203 on sélectionne le premier point $a^{(1)}_{i,0}$ de la constellation $C_i^{(1)}$. Pour cela:

    - on détermine le premier point de la loi en A ou en p qui vérifie

$$a_{i,0}^{(1)} \geq \frac{d_{i\,min}}{2},$$

    - on calcule

$$\widetilde{P}_i^{(1)} = \left[ a_{i,0}^{(1)} \right]^2,$$

    - on incrémente j d'une unité (j=1),
    - on initialise $M_i^{(1)}$ (nombre de point dans la constellation $C_i^{(1)}$) à 1.
    - le fonctionnement se poursuit à la case 204.

- à la case 204, on teste les valeurs de $\tilde{P}_i^{(1)}$ et de j. Si $\tilde{P}_i^{(1)} > P_{MAX}$, ou si j=128 (la constellation contient au maximum 128 points positifs puisque chaque symbole reçu est codé sur 8 bits), le fonctionnement se poursuit à la case 205, sinon il se poursuit à la case 206.
- à la case 205:

    - on décrémente $M_i^{(1)}$ d'une unité (pour ne pas tenir compte du dernier point $a^{(1)}_{i,j}$),
    - on incrémente i d'une unité pour passer à la constellation suivante,
    - le fonctionnement reprend à la case 202.

- à la case 206:

    - on sélectionne le point suivant $a^{(1)}_{i,j}$ de la constellation $C_i^{(1)}$:
    - on détermine le premier point de la loi en A ou en μ qui vérifie

$$a_{i,(j+1)}^{(1)} - a_{i,j}^{(1)} \geq d_{i\,min}$$

    - on calcule

$$\widetilde{P}_i^{(1)} = \frac{1}{M_i^{(1)}+1}\left[M_i^{(1)} * \widetilde{P}_i^{(1)} + (a_{i,j}^{(1)})^2\right],$$

- on incrémente j d'une unité (j=j+1 ),
- on incrémente $M_i^{(1)}$ d'une unité:

$$M_i^{(1)} = M_i^{(1)}+1$$

- le fonctionnement reprend ensuite à la case 204.

A l'étape 30, on calcule la puissance moyenne réelle $P^{(z)}$ de l'ensemble de constellation $E^{(z)}$ afin de vérifier si $P^{(z)} \leq P_{MAX}$:

- pour cela, à la case 301, on détermine la valeur de $K^{(z)}$ pour l'ensemble $E^{(z)}$ à partir des valeurs $Mi^{(z)}$: $K^{(z)}$ est le plus grand entier qui vérifie

$$2^{K^{(z)}} \leq \prod_{i=0}^{5} M_i^{(z)} .$$

Puis on calcule $P^{(z)}$ à partir de $K^{(z)}$ et des valeurs $M_i^{(z)}$, conformément à l'expression (1).
- à la case 302 on vérifie si $P^{(z)} > P_{MAX}$. Dans ce cas le fonctionnement se poursuit à la case 303. Sinon les six constellations $M_i^{(z)}$ sont stockées en mémoire à la case 304.
- à la case 303, on recherche

$$P_i^{(z)} = \max_{k \in \{0,...,5\}} P_k^{(z)}$$

afin de retirer le point de plus grande amplitude de la constellation $C_i^{(z)}$. Pour cela, on fixe $M_i^{(z+1)} = M_i^{(z)}-1$. Puis le fonctionnement reprend à la case 301.

Sur la figure 4 on a représenté sous forme de blocs les moyens de construction d'un ensemble de constellations selon l'invention. Ces moyens 400 comportent des moyens 401 d'approximation pour déterminer le premier ensemble de constellations $E^{(1)}$ en se basant sur les valeurs approchées $\widetilde{P}_i^{(1)}$, des moyens de vérification 402 pour vérifier si la puissance moyenne $P^{(z)}$ obtenue pour un ensemble $E^{(z)}$ est inférieure ou égale à $P_{MAX}$, et des moyens 403 de réajustement de l'ensemble $E^{(z)}$ pour fournir un ensemble $E^{(z+1)}$ de puissance moyenne $P^{(z+1)}$ inférieure. L'ensemble $E^{(N)}$ dont la puissance moyenne $P^{(N)}$ est inférieure ou égale à $P_{MAX}$ est stocké dans une mémoire 410. De façon avantageuse ces moyens sont constitués à partir d'un ensemble à microprocesseur programmé pour effectuer les opérations décrites sur l'organigramme de la figure 3.

**Revendications**

1. Méthode pour construire un ensemble de constellations ($C_i$) de points ($a_{i,j}$) non équiprobables destiné à être utilisé pour transmettre des données entre un émetteur (3A, 3B) et un récepteur (3B, 3A), ladite méthode permettant d'obtenir pour ledit ensemble de constellations une puissance moyenne (P) inférieure ou égale à un seuil fixé ($P_{MAX}$), caractérisée en ce qu'elle comporte:

- une première étape (20) qui consiste à construire un ensemble de constellations en se basant sur des valeurs approchées ($\widetilde{P}_i$) des puissances desdites constellations,
- une seconde étape (301, 302) qui consiste à vérifier si la puissance moyenne réelle de l'ensemble de constellations obtenu lors de la première étape est inférieure ou égale audit seuil,

- une troisième étape (303) qui consiste à réajuster si nécessaire une ou plusieurs fois ledit ensemble, en supprimant un ou plusieurs points dans une ou plusieurs constellations, de façon à ce que la puissance moyenne réelle dudit ensemble soit inférieure ou égale au seuil fixé.

2. Méthode selon la revendication 1, caractérisée en ce que la troisième étape consiste à supprimer le point de plus grande amplitude de la constellation qui a la plus grande puissance, jusqu'à obtenir une puissance moyenne réelle pour ledit ensemble qui soit inférieure ou égale au seuil fixé.

3. Méthode selon la revendication 1, caractérisée en ce que la première étape consiste à construire indépendamment chaque constellation en considérant que ses points sont équiprobables.

4. Equipement d'émission - réception (3A) comportant des moyens (400) de construction d'un ensemble de constellations ($C_i$) de points ($a_{i,j}$) non équiprobables destiné à être utilisé pour transmettre des données, lesdits moyens de construction permettant d'obtenir, pour ledit ensemble de constellations, une puissance moyenne (P) inférieure ou égale à un seuil fixé ($P_{MAX}$), caractérisé en ce que lesdits moyens de construction comportent:

   - des moyens (401) d'approximation pour construire un ensemble de constellations en se basant sur des valeurs approchées des puissances desdites constellations,
   - des moyens (402) de vérification pour vérifier si la puissance moyenne réelle de l'ensemble de constellations fourni par lesdits moyens d'approximation est inférieure ou égale audit seuil,
   - des moyens (403) de réajustement pour réajuster si nécessaire une ou plusieurs fois ledit ensemble, en supprimant un ou plusieurs points dans une ou plusieurs constellations, de façon à ce que la puissance moyenne réelle dudit ensemble soit inférieure ou égale au seuil fixé.

5. Equipement d'émission - réception selon la revendication 4, caractérisé en ce que les moyens (403) de réajustement comportent des moyens pour supprimer le point de plus grande amplitude de la constellation qui a la plus grande puissance, jusqu'à obtenir une puissance moyenne réelle pour ledit ensemble qui soit Inférieure ou égale au seuil fixé.

6. Equipement d'émission - réception selon la revendication 4, caractérisé en ce que lesdits moyens (401) d'approximation comportent des moyens pour construire indépendamment chaque constellation en considérant que ses points sont équiprobables.

7. Modem (3A) comportant des moyens de construction d'un ensemble de constellations de points non équiprobables destiné à être utilisé pour transmettre des données, lesdits moyens de construction permettant d'obtenir, pour ledit ensemble de constellations, une puissance moyenne inférieure ou égale à un seuil fixé, caractérisé en ce que lesdits moyens de construction comportent:

   - des moyens d'approximation pour construire un ensemble de constellations en se basant sur des valeurs approchées des puissances desdites constellations,
   - des moyens de vérification pour vérifier si la puissance moyenne réelle de l'ensemble de constellations fourni par lesdits moyens d'approximation est inférieure ou égale audit seuil,
   - des moyens de réajustement pour réajuster si nécessaire une ou plusieurs fois ledit ensemble, en supprimant un ou plusieurs points dans une ou plusieurs constellations, de façon à ce que la puissance moyenne dudit ensemble soit inférieure ou égale au seuil fixé.

8. Système de transmission de données comportant au moins un équipement d'émission - réception doté de moyens de construction d'un ensemble de constellations de points non équiprobables destiné à être utilisé pour la transmission de données, lesdits moyens de construction permettant d'obtenir, pour ledit ensemble de constellations, une puissance moyenne inférieure ou égale à un seuil fixé, caractérisé en ce que lesdits moyens de construction comportent:

   - des moyens d'approximation pour construire indépendamment chaque constellation en calculant des valeurs approchées des puissances desdites constellations,
   - des moyens de vérification pour vérifier si la puissance moyenne réelle de l'ensemble de constellations fourni par les moyens d'approximation est inférieure ou égale audit seuil,
   - des moyens de réajustement pour réajuster si nécessaire une ou plusieurs fois ledit ensemble, en supprimant un ou plusieurs points dans une ou plusieurs constellations, de façon à ce que la puissance moyenne dudit ensemble soit inférieure ou égale au seuil fixé.

9. Système de transmission selon la revendication 8, caractérisé en ce que ledit équipement d'émission - réception est un modem analogique de type PCM.

EP 0 994 609 A1

FIG.1

FIG.2

FIG.3

FIG.4

EP 0 994 609 A1

**Office européen des brevets**

**RAPPORT DE RECHERCHE EUROPEENNE**

Numéro de la demande

EP 99 20 3234

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 98 32257 A (MOTOROLA INC) 23 juillet 1998 (1998-07-23) * abrégé * * page 21, ligne 26 – page 22, ligne 16 * * page 22, ligne 25 – ligne 27 * | 1-9 | H04L25/49 |
| A | EP 0 852 438 A (ROCKWELL SCIENCE CENTER INC) 8 juillet 1998 (1998-07-08) * page 5, ligne 26 – page 9, ligne 47 * | 1-9 | |

DOMAINES TECHNIQUES RECHERCHES (Int.Cl.7)

H04L

Le présent rapport a été établi pour toutes les revendications

| Lieu de la recherche | Date d'achèvement de la recherche | Examinateur |
|---|---|---|
| LA HAYE | 31 janvier 2000 | Ghigliotti, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

11

## ANNEXE AU RAPPORT DE RECHERCHE EUROPEENNE
## RELATIF A LA DEMANDE DE BREVET EUROPEEN NO.

EP 99 20 3234

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2000

| Document brevet cité au rapport de recherche | Date de publication | Membre(s) de la famille de brevet(s) | | Date de publication |
|---|---|---|---|---|
| WO 9832257 A | 23-07-1998 | AU | 5898098 A | 07-08-1998 |
| | | EP | 0919087 A | 02-06-1999 |
| EP 0852438 A | 08-07-1998 | JP | 10200593 A | 31-07-1998 |

EPO FORM P0460

Pour tout renseignement concernant cette annexe : voir Journal Officiel de l'Office européen des brevets, No.12/82